# EUROPEAN PATENT APPLICATION

(11) **EP 4 280 012 A1**
(43) Date of publication of application: **22.11.2023**
(21) Application number: 22739508.4
(22) Date of filing: 14.01.2022
(51) Int. Cl.: G05D 1/02, G08G 1/00, G08G 1/0969, G01C 21/36, B60W 30/10

(54) **CONTROL METHOD AND CONTROL SYSTEM**

(30) Priority: 18.01.2021 JP 2021005587
(71) Applicant: Aichi Steel Corporation, Tokai-shi, Aichi 476-8666 (JP)
(72) Inventor: YAMAMOTO Michiharu, Tokai-shi, Aichi 476-8666 (JP); NAGAO Tomohiko, Tokai-shi, Aichi 476-8666 (JP); AOYAMA Hitoshi, Tokai-shi, Aichi 476-8666 (JP)
(74) Representative: Viering, Jentschura & Partner mbB Patent- und Rechtsanwälte
(86) International application number: PCT/JP2022/001230
(87) International publication number: WO 2022/154103

(57) **Abstract**

A vehicle system (1) switches control between a restart period after restart of a function of controlling traveling of the vehicle following a parking period during which the function is stopped, until the vehicle moves and first detects a magnetic marker and a normal travel period after the vehicle detects the magnetic marker following the restart period. In the restart period, restart control (S105) is performed in which a position of the vehicle is identified based on a position measured in the restart period to cause the vehicle to travel. In the normal travel period, normal travel control (S107) is performed in which the position of the vehicle is identified based on a position of the detected magnetic marker to cause the vehicle to travel.

## Description

### TECHNICAL FIELD

The present invention is an invention related to a control method and control system for causing a vehicle to travel by using a magnetic marker disposed on a travel road.

### BACKGROUND ART

Conventionally, a system has been known in which a vehicle is caused to travel along a travel road by lateral control for making a lateral shift amount of the vehicle with respect to a magnetic marker arrayed on the travel road close to zero (for example, refer to Patent Literature 1). With a vehicle including, in addition to a magnetic sensor for detecting a magnetic marker, a millimeter wave radar or lidar for detecting a preceding vehicle by using reflection of electric waves or light to measure a following distance, in addition to following the preceding vehicle, automatic traveling of a travel road where magnetic markers are disposed can be performed.

### CITATION LIST

### PATENT LITERATURE

Patent Literature 1: Japanese Unexamined Patent Application Publication No. 2002-334400

### SUMMARY OF INVENTION

### TECHNICAL PROBLEM

However, the above-described conventional system has a problem in which the degree of difficulty of automatic driving in a period after movement by the vehicle starts until a magnetic marker is first detected is high and manual driving is inevitable.

The present invention was made in view of the above-described conventional problem, and is an invention to provide a control method and control system for achieving high-level automatic driving by driving assist control using magnetic markers.

### SOLUTION TO PROBLEM

One mode of the present invention resides in a control method for a vehicle including a magnetic sensor to travel a travel road including a travel road where magnetic markers acting magnetism to a peripheral place are disposed, wherein
control is switched between
a restart period after restart of a function of controlling traveling of the vehicle following a parking period during which the function is stopped, until the vehicle moves and first detects a magnetic marker and
a normal travel period after the vehicle detects the magnetic marker following the restart period,
in the restart period, control is performed in which a vehicle position is identified, based on the vehicle position at a last transition to the parking period or a position measured in the restart period, to cause the vehicle to travel, and,
in the normal travel period, control is performed in which the vehicle position is identified, based on a position of any magnetic marker detected, to cause the vehicle to travel.

One mode of the present invention resides in a control system for a vehicle including a magnetic sensor to travel a travel road including a travel road where magnetic markers acting magnetism to a peripheral place are disposed, including:
a circuit which performs control in a restart period after restart of a function controlling traveling of the vehicle following a parking period during which the function is stopped, until the vehicle moves and first detects a magnetic marker; in the restart period, control is performed in which a vehicle position is identified, based on the vehicle position at a last transition to the parking period or a position measured in the restart period, to cause the vehicle to travel;
a circuit which performs control in a normal travel period after the vehicle first detects the magnetic marker following the restart period; in the normal travel period, control is performed in which the vehicle position is identified, based on a position of any magnetic marker detected, to cause the vehicle to travel; and
a circuit which performs control switching when a transition is made from the restart period to the normal travel period.

### Advantageous Effects of Invention

The present invention is an invention of the control method or control system for a vehicle to travel the travel road where magnetic markers are disposed. In the control method and control system of the present invention, control is switched between the restart period after restart of the function of controlling traveling of the vehicle following the parking period during which the function is stopped, until the vehicle moves and first detects the magnetic marker and the normal travel period after the vehicle detects the magnetic marker.

In the restart period, control is performed in which the vehicle position is identified, based on the vehicle position at the last transition to the parking period or the position measured in the restart period, to cause the vehicle to travel. In the normal travel period, control is performed in which the vehicle position is identified, based on the position of any magnetic marker detected, to cause the vehicle to travel.

In the control method and control system of the present invention, the restart period is set between the parking period and the normal travel period. Control of the vehicle in this restart period is control not assuming detection of the magnetic marker. By switching control between the normal travel period and the restart period, traveling after the parking period until the magnetic marker is detected can be made. According to the control method and control system of the present invention, the area in which traveling of the vehicle is controllable can be expanded, and general applicability can be improved.

Thus, according to the control method and control system of the present invention, higher-level automatic driving can be achieved by using magnetic markers disposed on the travel road.

### BRIEF DESCRIPTION OF DRAWINGS

FIG. 1 is a descriptive diagram of two areas where vehicles can come and go via a trunk road.
FIG. 2 is a descriptive diagram of roads in the areas.
FIG. 3 is a perspective view depicting a magnetic marker.
FIG. 4 is a descriptive diagram of a vehicle traveling a road where magnetic markers are disposed.
FIG. 5 is a front view of an RFID tag.
FIG. 6 is an upper view of a vehicle.
FIG. 7 is a block diagram depicting the configuration of a vehicle system.
FIG. 8 is a flow diagram depicting a flow of basic process.
FIG. 9 is a flow diagram depicting a flow of restart control.
FIG. 10 is a descriptive diagram depicting a route as a control target.
FIG. 11 is a flow diagram depicting a flow of normal travel control.
FIG. 12 is a descriptive diagram of a relative position estimated by inertial navigation.
FIG. 13 is a descriptive diagram of a deviation ΔD with respect to the route.
FIG. 14 is a flow diagram depicting a flow of another restart control.
FIG. 15 is a flow diagram depicting a flow of still another restart control.

### DESCRIPTION OF EMBODIMENTS

Embodiments of the present invention are specifically described by using the following embodiments.

### (FIRST EMBODIMENT)

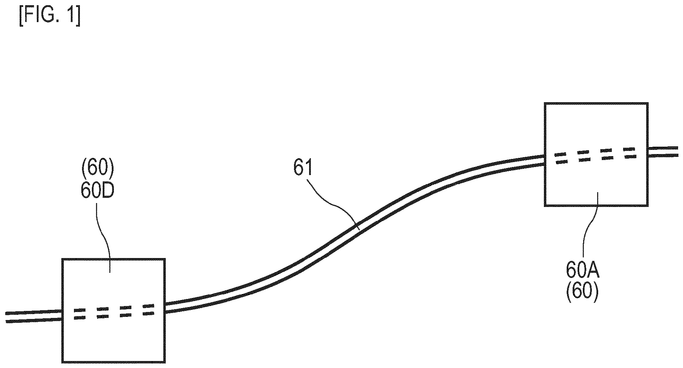

The present embodiment is an example of vehicle system 1 forming one example of control system for vehicle 5, and a control method of vehicle 5. According to this control method and vehicle system 1, when moving from home toward a work site in vehicle 5, a departure can be made from a home garage by automatic driving. Details of this are described with reference to FIG. 1 to FIG. 14.

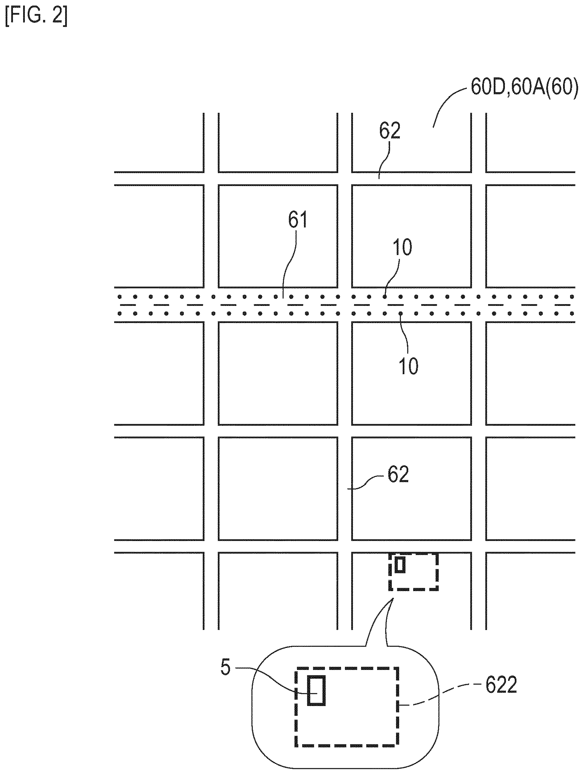

In the present embodiment, a route where vehicle 5 moves between areas 60 connected via trunk road 61 is exemplarily described. In each area 60, movements can be made by using daily service roads 62 (FIG. 2). Trunk road 61 is generally a road where magnetic markers 10 are disposed with, for example, two-meter pitches or the like. On the other hand, daily service road 62 is generally a road where magnetic markers 10 are not disposed. Thus, a travel road vehicle 5 travels is a travel road including a travel road where magnetic markers 10 are disposed.

FIG. 2 exemplarily depicts area 60, representing the position of vehicle 5 in area 60. The drawing is used to depict both area 60D as a starting point and area 60A as a destination point. Reference numeral 622 for area 60D as a starting point denotes, for example, home as a starting point, and reference numeral 622 for area 60A as a destination point denotes, for example, a work site as a destination point.

If not only trunk road 61 where magnetic markers 10 are disposed but also daily service roads 62 exemplarily depicted in FIG. 2 are included in control targets, for example, driving of the vehicle from area 60D where the starting point is located to area 60A where the destination point is located can be automated (refer to FIG. 1). For example, when home 622 and the work site are located in different areas 60, vehicle 5 can automatically travel a route which leads, after departing from home 622 in area 60D, to area 60A where a company as a work site is located using trunk road 61 and then to the work site.

In the following, after description is made to configuration of (1) magnetic marker 10 disposed on the travel road and (2) vehicle system 1, (3) operation of vehicle system 1 is described.

### (1) Magnetic Marker

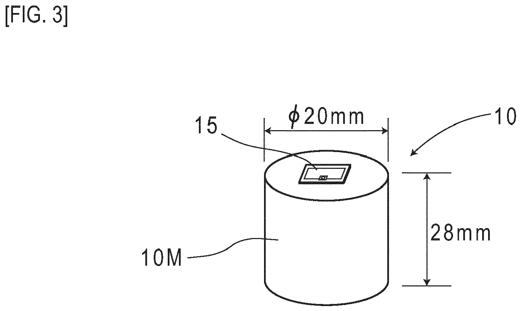

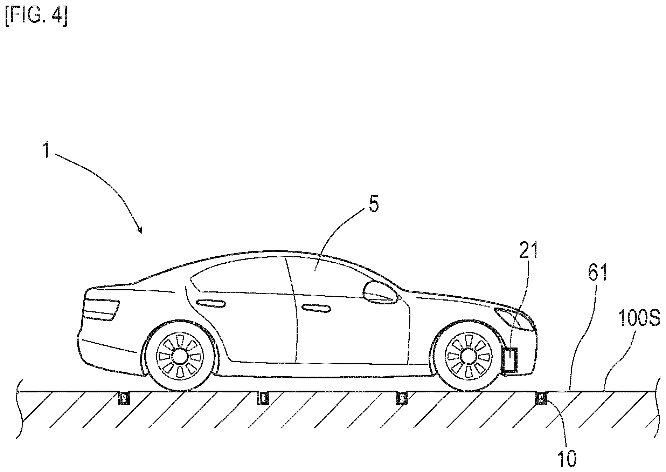

Magnetic marker 10 (FIG. 3) is a marker with RFID tag 15 (Radio Frequency Identification Tag, wireless tag) integrated in magnet 10M forming a columnar shape having a diameter of 20 millimeters and a height of 28 millimeters. Magnetic marker 10 is disposed, as depicted in FIG. 4, in a state of being accommodated in a hole dug in road surface 100S. Magnet 10M forming magnetic marker 10 is a ferrite plastic magnet with magnetic powder of iron oxide as a magnetic material dispersed into a polymer material as a base material. The polymer material is, for example, chlorinated polyethylene, poly phenylene sulfide (PPS), or the like.

In magnetic marker 10, sheet-shaped RFID tag 15 is arranged on an end face of columnar-shaped magnet 10M. RFID tag 15 is an electronic component which wirelessly outputs tag information. Note that after RFID tag 15 is arranged on the end face of magnet 10M, a coating layer of a resin material may be provided on a surface. As a coating layer, a layer formed of a composite material having fiber impregnated with a resin material may be used. Alternatively, RFID tag 15 may be disposed on an end face of magnet 10M where the coating layer is formed. The coating layer may be provided on part or the entirety of the outer surface of magnet 10M.

Furthermore, part or the entirety of RFID tag 15 may be provided to be buried inside magnet 10M. In place of columnar-shaped magnetic marker 10, a sheet-shaped magnetic marker formed of a magnet sheet may be adopted. In this case, sheet-shaped RFID tag 15 may be laminated on a surface of the magnet sheet. Furthermore, the magnetic marker may be formed by laminating two magnet sheets together. In this case, sheet-shaped RFID tag 15 may be interposed between two magnet sheets.

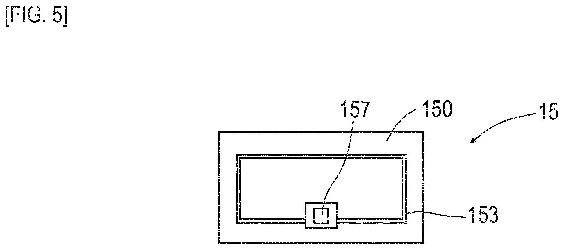

RFID tag 15 (FIG. 5) is an electronic component with IC chip 157 mounted on a surface of tag sheet 150 cut out from, for example, a PET (Polyethylene terephthalate) film. On the surface of tag sheet 150, a printed pattern of antenna 153 is provided. The antenna 153 has both of an antenna function for power supply in which exciting current occurs by external electromagnetic induction and an antenna function for communication to wirelessly transmit information. RFID tag 15 operates by wireless external power supply to externally output tag information such as a tag ID as identification information. The tag ID to be externally outputted from RFID tag 15 is one example of identification information of magnetic marker 10.

Note that magnet 10M configuring magnetic marker 10 as described above is a magnet with magnetic powder dispersed in a polymer material. Since this magnet 10M has a large electric internal resistance, there is less possibility of occurrence of eddy current in accordance with wireless power supply to RFID tag 15. Thus, when this magnet 10M is adopted, electric power can be efficiently supplied to RFID tag 15 from outside. This magnet 10M is suitable as a magnet which retains RFID tag 15.

### (2) Vehicle System

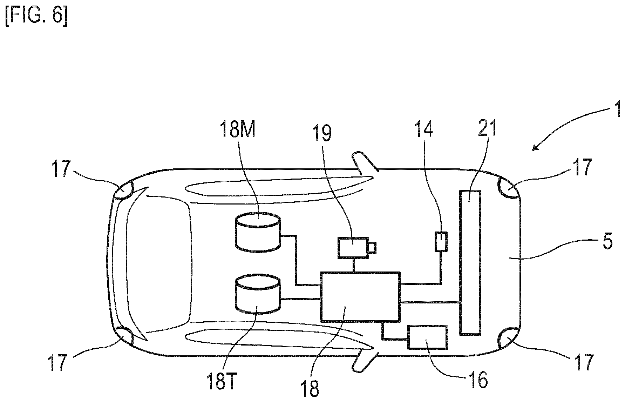

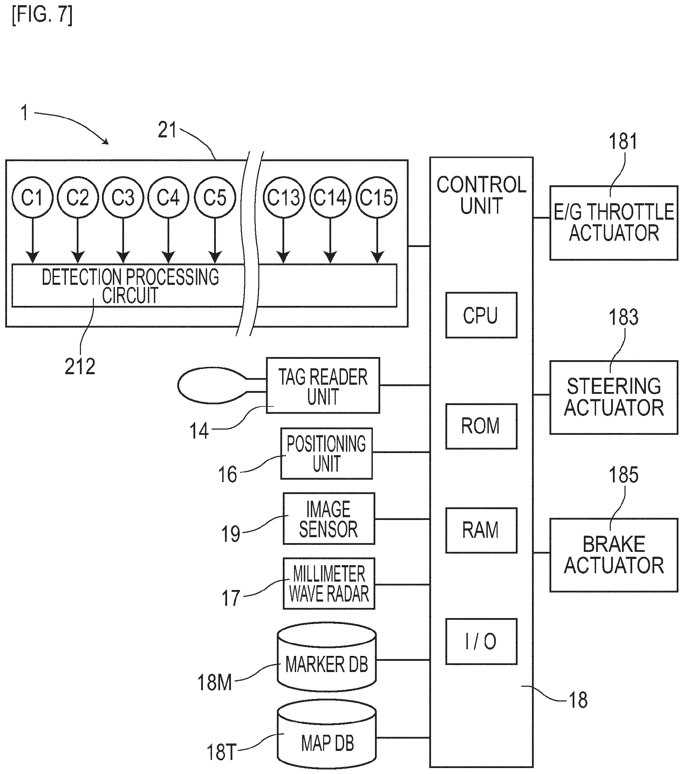

Vehicle system 1 (FIG. 6 and FIG. 7) is configured to include control unit 18 which controls traveling of vehicle 5, externally-controllable various actuators for travel control, object detection sensors such as millimeter wave radar 17 and image sensor 19, tag reader unit 14 which communicates with RFID tag 15, and positioning unit 16 for identifying an absolute position or a relative position.

Control unit 18 is a unit of a circuit configured mainly of an electronic substrate (omitted in the drawings) on which electronic components such as a CPU (Central Processing Unit), a ROM (Read Only Memory), and a RAM (Random Access Memory) are mounted. In control unit 18, a storage device (storage medium) such as a hard disk drive (HDD) or a solid state drive (SSD), a wireless communication circuit, and so forth are connected via an I/O (Input/Output) to the electronic substrate.

In control unit 18, by using a storage area of the storage device, marker database (marker DB) 18M storing marker information regarding each magnetic marker 10, map database (map DB) 18T storing a three-dimensional map data, and so forth are provided. The three-dimensional map data is map data representing the shape and structure of each road, as well as the three-dimensional structure of each road attachment such as a curbstone, guardrail, center strip, or road sign; the three-dimensional structure of each ambient environment such as a building or land bridge; and so forth.

The marker information stored in marker DB 18M has the tag ID (tag information), which is identification information of the affixed RFID tag 15, linked thereto (associated therewith). In the configuration of the present embodiment, by using the tag ID to refer to marker DB 18M, the corresponding magnetic marker 10 can be identified.

In the marker information, position data (position information) indicating the laying position of each magnetic marker 10, information indicating an attribute of that laying position (such as a road type), regulation information such as a speed limit, and so forth are included. As described above, to this marker information, the tag ID is linked. By using the tag ID to refer to the marker DB 18M, the laying position of each magnetic marker 10 can be identified. That is, the tag ID forms one example of information that can identify the position of magnetic marker 10.

The map data stored in the map DB 18T is configured of vector data indicating the road structure and ambient environments. In this map data, the laying position of each magnetic marker 10 and so forth are mapped. For example, when vehicle 5 detects any magnetic marker 10, by identifying that magnetic marker 10, the position in the map data can be identified. And, if the position of vehicle 5 in the map data is identified, the shape of the road and the road structure ahead indicated by the map data can be grasped.

Note that the control unit 18 may be able to receive realtime traffic situations such as a construction site and the lighting states of traffic lights from external server as appropriate. In this case, a dynamic map on which realtime traffic situations are reflected can be constructed, and vehicle control using the dynamic map can be performed.

Various actuators controlled by control unit 18 include throttle actuator 181 (FIG. 7) for adjusting engine outputs, steering actuator 183 for changing the steering direction, brake actuator 185 for adjusting braking force, and so forth. With control unit 18 controlling these actuators as appropriate, vehicle 5 can be caused to travel.

As a sensor connected to control unit 18, there are magnetic sensors Cn, millimeter wave radar 17, image sensor 19, and so forth. Magnetic sensors Cn are sensors for detecting magnetism. In vehicle 5, sensor array 21 with fifteen magnetic sensors Cn arrayed on a straight line is incorporated. Sensor array 21 is a rod-shaped unit elongated in a vehicle-width direction, and is attached to the bottom surface of vehicle 5 in a state of facing road surface 100S.

Sensor array 21 includes detection processing circuit 212 which performs a process of detecting magnetic marker 10, and so forth. Detection processing circuit 212 controls fifteen magnetic markers Cn to acquire magnetic measurement values of respective magnetic markers Cn. Then, detection processing circuit 212 processes the magnetic measurement values of respective magnetic markers Cn, thereby performing the process of detecting magnetic marker 10, and so forth.

In sensor array 21 (FIG. 7), fifteen magnetic sensors Cn are arranged with ten-centimeter pitches. Magnetic measurement values outputted from magnetic sensors C1 to C15 form a discrete magnetic distribution in the vehicle-width direction. When detecting any magnetic marker 10, sensor array 21 (detection processing circuit 212) outputs a detection signal indicating as such, and measures a lateral shift amount of vehicle 5 with respect to magnetic marker 10. When sensor array 21 is positioned directly above magnetic marker 10, based on the distribution of magnetic measurement values outputted from respective magnetic sensors Cn (magnetic distribution in the vehicle-width direction), the position of magnetic marker 10 in the vehicle-width direction can be identified. And, based on the position of the magnetic marker in the vehicle-width direction, sensor array 21 identifies a lateral shift amount of the vehicle with respect to magnetic marker 10.

As magnetic sensor Cn, for example, an MI sensor which detects magnetism by using the known MI effect (Magneto Impedance Effect), or the like is suitable. The MI effect is a magnetic effect in which the impedance of a magneto-sensitive body such as an amorphous wire sensitively changes in accordance with the external magnetic field. The MI sensor has magnetic sensitivity to a direction of the magneto-sensitive body incorporated in a straight line. Magnetic sensor Cn may be, for example, a magnetic sensor which can detect magnetic components in one direction such as the vehicle-width direction or vertical direction. It may be a magnetic sensor which can detect magnetic components in two directions such as magnetic components in a forwarding direction and magnetic components in the vehicle-width direction. It may be a magnetic sensor which can detect magnetic components in three directions such as magnetic components in the forwarding direction and the vehicle-width direction and, additionally, those in the vertical direction.

Millimeter wave radar 17 is an object detection sensor using millimeter waves having wavelengths from 1 millimeter to 10 millimeters and frequencies from 30 GHz to 300 GHz. Millimeter wave radar 17 detects a target object and also measures distance to the target object by using reflected waves when millimeter waves are transmitted. According to millimeter wave radar 17, in addition to other vehicles and road structures such as a guardrail or a curbstone, a person can be detected. In vehicle 5, millimeter wave radar 17 is arranged at each of front, rear, left, and right corner portions of the vehicle body so as to be able to monitor the periphery.

Image sensor 19 is a sensor including a front camera for taking an image of an environment ahead. Image sensor 19 is configured to include a processing circuit (omitted in the drawings) which performs image processing, and so forth. Image sensor 19 performs image processing on a taken image to detect a white line sectioning a lane, a road sign, a traffic light, a person, a bicycle, a preceding vehicle, an oncoming vehicle, and so forth. Note that in detecting a pedestrian or the like, sensor fusion technology for enhancing detection accuracy by using a plurality of sensors is utilized, such as performing image processing predominantly on a closely-watched area identified by the millimeter wave radar 17.

Positioning unit 16 includes a GPS (Global Positioning System) unit, an inertial measurement unit, and so forth. The GPS unit is a unit which measures a vehicle position (position of the vehicle) by using the GPS, which is one type of the GNSS (Global Navigation Satellite System). The inertial measurement unit is a unit which measures a change rate (angular velocity) of the yaw angle of the vehicle and acceleration in the forwarding direction and a lateral direction. By using the angular velocity and the acceleration measured by the inertial measurement unit, a relative position (one example of a displacement amount caused by movement of the vehicle) from a reference position and the orientation of the vehicle can be identified. By adopting the inertial measurement unit, a relative position and a turn angle (change amount of the yaw angle) after passing over the reference position such as the laying position of magnetic marker 10 can be identified with high accuracy. By adopting the inertial measurement unit, it is possible to identify the vehicle position at a location where satellite waves cannot be received, such as the inside of a tunnel.

Tag reader unit 14 is a communication unit which wirelessly communicates with RFID tag 15 retained in magnetic marker 10 (FIG. 4). Tag reader unit 14 wirelessly feeds power required for operation of RFID tag 15 to cause RFID tag 15 to operate, and reads the tag ID (tag information) as identification information of RFID tag 15. Note that while magnetic sensor array 21 and tag reader unit 14 are depicted as separate bodies in FIG. 6, a unit having these integrated therein may be adopted.

### (3) Operation of Vehicle System

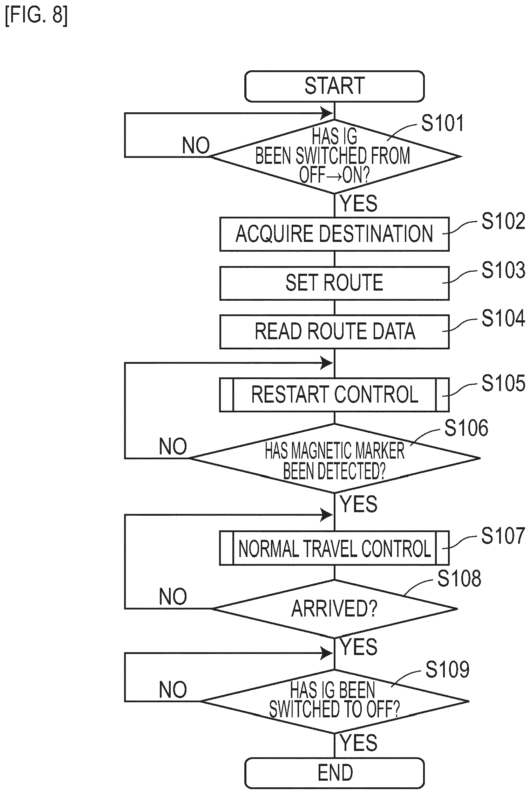

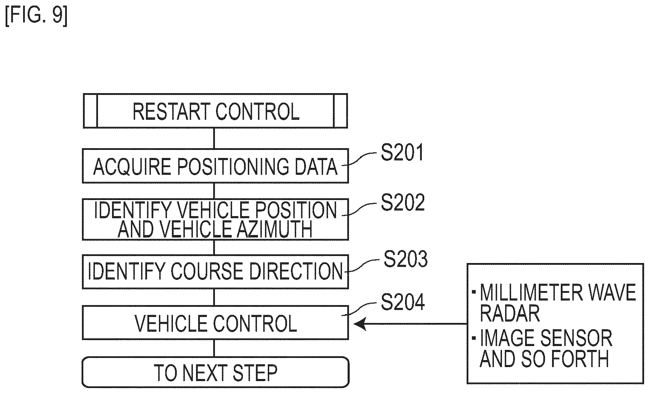

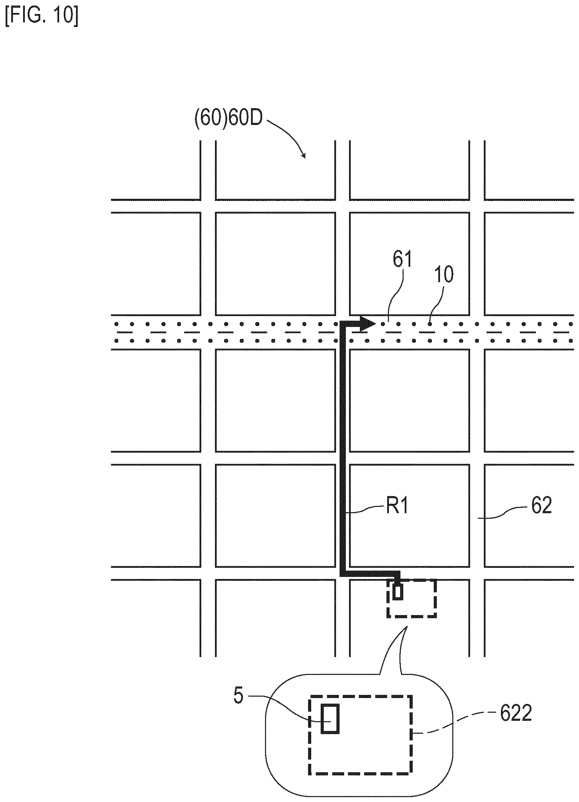

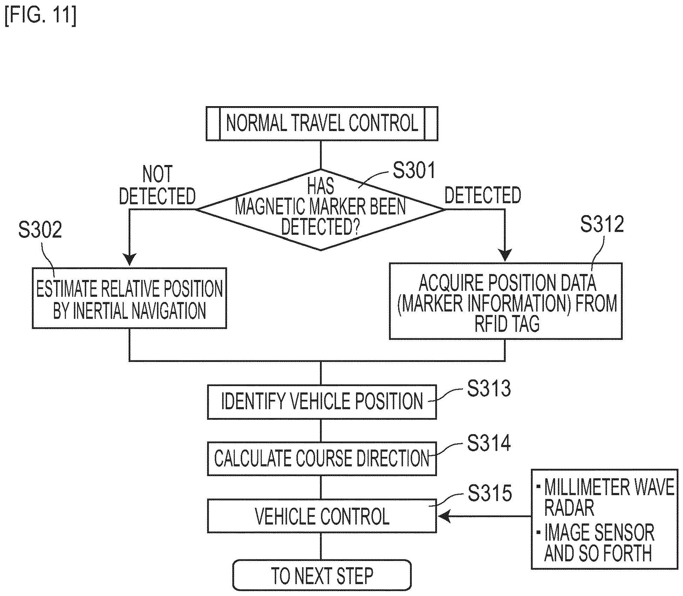

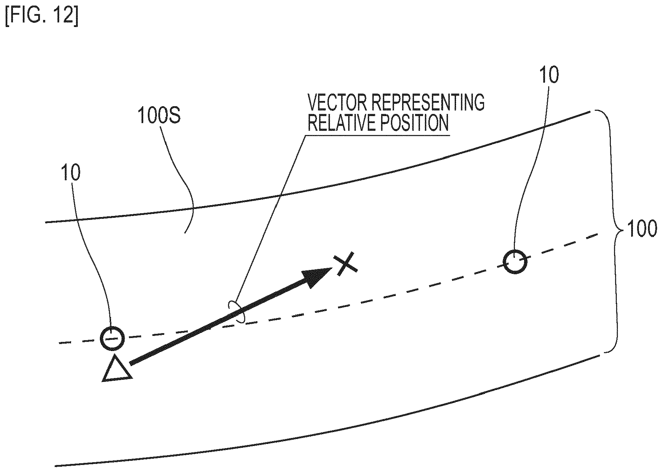

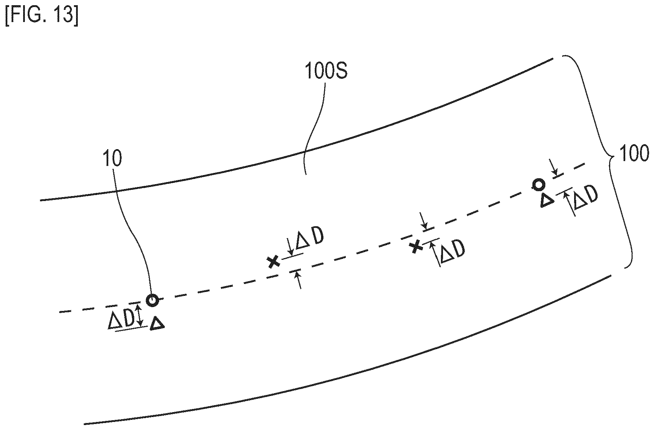

Next, the operation of vehicle system 1 configured as described above is described with reference to FIG. 8 to FIG. 13. FIG. 8 depicts a flow of (3.1) basic process when vehicle 5 moves. FIG. 9 depicts a flow of (3.2) restart control during a restart period following a parking period. FIG. 11 depicts a flow of (3.3) normal travel control of traveling as detecting any magnetic marker 10. Note that FIG. 10 is a reference diagram in description of restart control. FIG. 12 and FIG. 13 are descriptive diagram in description of normal travel control.

### (3.1) Basic Process

The basic process (FIG. 8) is a process after an ignition as a main power supply of vehicle 5 is switched to ON (IG ON) until arrival at the destination point to switch the ignition to OFF (IG off). The flow of this basic process is described along the flow diagram of FIG. 8.

After the parking period in which the ignition of vehicle 5 is retained in an OFF state, when the ignition is switched to be an ON state (IG ON, S101: YES), control unit 18 acquires a destination point inputted by, for example, a user of vehicle 5 (S102). Note that examples of a method of inputting a destination point include an input method using a portable terminal (omitted in the drawings) communicably connected by a Bluetooth (R) function and an input method on a touch panel display (omitted in the drawings) provided in vehicle 5, and so forth.

Control unit 18 refers to the three-dimensional map data stored in map DB 18T, identifies a route to the destination point by arithmetic operation, and sets that route as a control target (S103). Note that when identifying a route to the destination point, control unit 18 also determines magnetic marker 10 at which vehicle 5 is to arrive first by restart control, which will be described further below. Thus, magnetic marker 10 determined by control unit 18 is an optimum magnetic marker to be detected first by the vehicle to arrive at the destination point. Control unit 19 stores identification information of magnetic marker 10 determined together with identification of the route. Although description will be made in detail further below, the identification information of this magnetic marker 10 is information as a trigger for switching from restart control at step S105 to normal travel control at step S107 described below.

Then, control unit 18 reads, from map DB 18T, route data indicating that route on the three-dimensional map data (S104), and starts control so as to cause vehicle 5 to travel along the corresponding route.

Control unit 18 first performs restart control of causing vehicle 5 to travel by automatic traveling based on the vehicle position measured by the positioning unit 16 (will be described further below with reference to FIG. 9) (S105). This restart control is control not assuming magnetic markers 10, and is performed in a restart period until any magnetic marker 10 is detected (S106: No→S105).

When magnetic marker 10 determined together when a route to the destination point is identified as described above is detected while vehicle 5 is traveling by restart control (S106: Yes), that is, when a tag ID matching the identification information of magnetic marker 10 stored by control unit 18 as described above is acquired from corresponding RFID tag 15, control unit 18 switches control to be applied to vehicle 5 from restart control at step S105 described above to normal travel control at step S107. Normal travel control is control directed to a road where magnetic markers 10 are disposed, such as trunk road 61. This normal travel control assumes that magnetic markers 10 are successively detected. Note that details of normal travel control will be described further below with reference to FIG. 11 to FIG. 13.

In the normal travel period after vehicle 5 starts moving from the starting point and first detects magnetic marker 10 until arrival at the destination point, control unit 18 performs normal travel control (S108: No→S107). Upon arrival at the destination point, control unit 18 ends the process in response to switching the ignition of vehicle 5 to an OFF state (IG OFF) (S109: Yes). Note that at IG OFF, in control unit 18, the vehicle position and the vehicle azimuth indicating the orientation of vehicle 5 (absolute azimuth) are stored (saved, stored, or recorded) in a storage area.

Note that, for example, after branching from trunk road 61 (FIG. 2) and entering daily service road 62 (refer to FIG. 2) to the destination point, there is a possibility that magnetic markers 10 cannot be contiguously detected. In this case, control unit 18 causes vehicle 5 to automatically travel by inertial navigation with reference to magnetic marker 10 detected lastly (automatic travel control). Although details will be described further below, this automatic travel control by control unit 18 is performed as part of normal travel control.

### (3.2) Restart Control

Restart control (FIG. 8 and FIG. 9) is, as described above, control after the ignition of vehicle 5 is switched to an ON state until any magnetic marker 10 is detected. This restart control is control not assuming magnetic markers 10 and for causing vehicle 5 to autonomously travel. As a situation in which restart control is applied, for example, as in FIG. 10, a situation can be assumed in which, after vehicle 5 parked at home 622 starts moving and moves along arrow R1 until entering trunk road 61 where magnetic markers 10 are disposed. Note that after entering trunk road 61, switching is made to normal travel control, which will be described in detail with reference to FIG. 11. Note that arrow R1 is part of a route as the control target determined at step S103 in the above-described basic process.

In restart control of FIG. 9, control unit 18 first acquires positioning data by positioning unit 16 (S201). By using this positioning data, control unit 18 identifies a vehicle position and a vehicle azimuth (S202). As described above, the positioning unit 16 includes a GPS unit which outputs position data indicating absolute positions, an inertial measurement unit which outputs an angular velocity and acceleration, and so forth.

When the situation is such that the GPS unit can perform positioning, control unit 18 uses position data by the GPS unit and identify the vehicle position on the route set at step S103 described above. Also, against the three-dimensional structure on the periphery of the vehicle position represented on the three-dimensional map, control unit 18 checks a peripheral three-dimensional structure identified by image sensor 19 and millimeter wave radar 17 included in vehicle 5. With this check, control unit 18 enhances accuracy of the vehicle position and identifies the vehicle azimuth representing the orientation of vehicle 5.

Note that when GPS falls into an unusable situation, for example, a situation in which satellite waves cannot be received, while vehicle 5 is traveling by restart control, control unit 18 identifies the vehicle position and the vehicle azimuth by inertial navigation. Control unit 18 takes the last time point when the vehicle position and the vehicle azimuth are identified as a reference, and estimates a relative position caused by traveling of vehicle 5 thereafter. Then, by adding the estimated relative position to the vehicle position at the reference time point, the latest vehicle position is identified. Note that the relative position of vehicle 5 is calculated based on the history of acceleration and angular velocities measured by the inertial measurement unit.

Also, after the above-described reference time point, by using measurement history of angular velocities by the inertial measurement unit, control unit 18 estimates the turn angle. Specifically, by integration of the angular velocity, the turn angle, which is a change amount of the yaw angle, can be calculated. By adding the estimated turn angle (change amount of the yaw angle) to the vehicle azimuth at the reference time point, control unit 18 identifies the latest vehicle azimuth. Here, by grasping the peripheral three-dimensional structure by using sensors such as image sensor 19 and millimeter wave radar 17, and checking the peripheral three-dimensional structure grasped against the three-dimensional structure represented by the three-dimensional map, accuracy of the vehicle position and the vehicle azimuth can be enhanced. Note that estimation of the vehicle position or the vehicle azimuth by checking the peripheral three-dimensional structure grasped by using the sensors against the three-dimensional structure represented by the three-dimensional map may be mainly performed.

By combining the vehicle position and the vehicle azimuth identified at step S202 described above with the route data read at step S104 described above, control unit 18 identifies the position and the orientation of vehicle 5 on the route. With this, control unit 18 identifies the peripheral three-dimensional structure in surroundings including a space ahead of vehicle 5, and identifies a direction of the course of vehicle 5 for moving along the route (S203).

Control unit 18 controls vehicle 5 so that vehicle 5 can travel toward the direction of the course identified at this step S203 (S204). During this control, detection data by millimeter wave radar 17 and image sensor 19 and so forth are taken into control unit 18 as occasion arises, and vehicle 5 is controlled while ensuring safety. For example, according to millimeter wave radar 17, it is possible to detect peripheral vehicles such as a preceding vehicle and an oncoming vehicle, a guardrail, a bicycle, a pedestrian, or the like. According to image sensor 19, it is possible to detect a road sign or a road marking such as a crosswalk, and it is also possible to recognize the state of the traffic light.

Restart control of FIG. 9 continues until any magnetic marker 10 is detected, as described above with reference to the flow diagram of the basic process of FIG. 8 (S106 in FIG. 8: No→S105). When any magnetic marker 10 is detected, switching is made from restart control (FIG. 9) to normal travel control (FIG. 11) (S106 in FIG. 8: Yes^-S107).

### (3.3) Normal Travel Control

During performing normal travel control of FIG. 11, control unit 18 switches a method of identifying the vehicle position or the like in accordance with whether any magnetic marker 10 is detected or not (S301). If any magnetic marker 10 has been detected (S301: detected), control unit 18 acquires the tag ID (marker information) from RFID tag 15 retained in that magnetic marker 10 (S312). Control unit 18 refers to marker DB 18M by using the acquired tag ID, and identifies the position (laying position) and so forth of magnetic marker 10 detected. Then, control unit 18 identifies the vehicle position based on the position of magnetic marker 10 detected (S313). Specifically, with reference to the laying position of magnetic marker 10, control unit 18 identifies a position acquired by shifting by the lateral shift amount of vehicle 5 with respect to magnetic marker 10 as a vehicle position.

On the other hand, if vehicle 5 is positioned midway between magnetic markers 10 adjacent to each other and cannot detect any magnetic marker 10 (S301: not detected), control unit 18 takes the vehicle position (position with a Δ mark in FIG. 12) identified based on the laying position of magnetic marker 10 last detected as a reference position, and estimates a relative position of vehicle 5 by inertial navigation (S302). Specifically, control unit 18 estimates the relative position or the like based on the angular velocity and the acceleration measured by the inertial measurement unit. Then, as exemplarily depicted in FIG. 12, control unit 18 identifies a position with a × mark acquired by moving from the reference position by the relative position estimated at step S302 as a vehicle position (S313). Note in the drawing that one example of a vector representing this relative position is indicated by an arrow.

Upon identifying the vehicle position, with reference to a route as a control target indicated by a broken line in FIG. 13, control unit 18 calculates a deviation ΔD of its own vehicle position. Then, control unit 18 calculates a direction of the course based on this deviation ΔD by arithmetic operation (S314). Control unit 18 performs control so as to cause vehicle 5 to travel toward the direction of the course calculated at this step S314 (S315). Note that, as with step S204 described above, while normal travel control is being performed, detection data by millimeter wave radar 17 and image sensor 19 and so forth are taken into control unit 18 as occasion arises, and vehicle 5 is controlled while ensuring safety.

Note that in area 60A where the destination point is located (refer to FIG. 2), when the destination point is positioned as facing daily service road 62 where magnetic markers 10 are not disposed, automatic travel control by inertial navigation similar to restart control of FIG. 9 may be required. In this case, control unit 18 identifies the vehicle position and the vehicle azimuth by inertial navigation with a flow of step S301: not detected→S302 (S313). With this, control unit 18 identifies the peripheral three-dimensional structure in surroundings including the space ahead of vehicle 5, and calculates the direction of the course of vehicle 5 for moving along the route (S314).

Here, the difference in control between trunk road 61 where magnetic markers 10 are disposed and a road where magnetic markers 10 are not disposed, such as daily service road 62, resides in the presence or absence of lateral control of making the lateral shift amount of vehicle 5 with respect to magnetic marker 10 closer to a predetermined value. For the road where magnetic markers 10 are not disposed, with lane recognition by image processing and so forth and with reference to the vehicle position measured by the GPS unit, the vehicle azimuth (yaw angle) based on the measurement values of the inertial measurement unit, and so forth, the control target of the steered angle is determined. On the other hand, for the road where magnetic markers 10 are disposed, in addition to the above, the control target of the steered angle is determined by using the lateral shift amount with respect to magnetic marker 10.

As described above, the control method of the present embodiment is a control method for vehicle 5 including magnetic sensors Cn traveling a road (travel road) where magnetic markers 10 are disposed. In this control method, control is switched between the restart period and the normal travel period. The restart period is the period following the parking period. During the parking period, the function of controlling traveling of vehicle 5 is stopped. The restart period is the period after restart of the function until vehicle 5 moves and first detects magnetic marker 10, the normal travel period is the period after magnetic marker 10 is detected.

In the restart period, restart control is performed in which the vehicle position is identified, based on the position measured in the restart period following the parking period, to cause vehicle 5 to travel. In the normal travel period, normal travel control is performed in which the vehicle position is identified, based on the position of detected magnetic marker 10, to cause vehicle 5 to travel.

In the control of the present embodiment, the restart period in which restart control is applied is set between the parking period and the normal travel period. The control of vehicle 5 in this restart period is control not assuming detection of any magnetic marker 10. By switching control between the normal travel period and the restart period, automatic travel of vehicle 5 from starting moving after the parking period until detecting any magnetic marker 10 can be made. According to this control method, the area in which traveling of vehicle 5 is controllable can be expanded, and general applicability can be improved. According to the control method of the present embodiment, it is possible to achieve high-level automatic driving by using magnetic markers 10 disposed on the road.

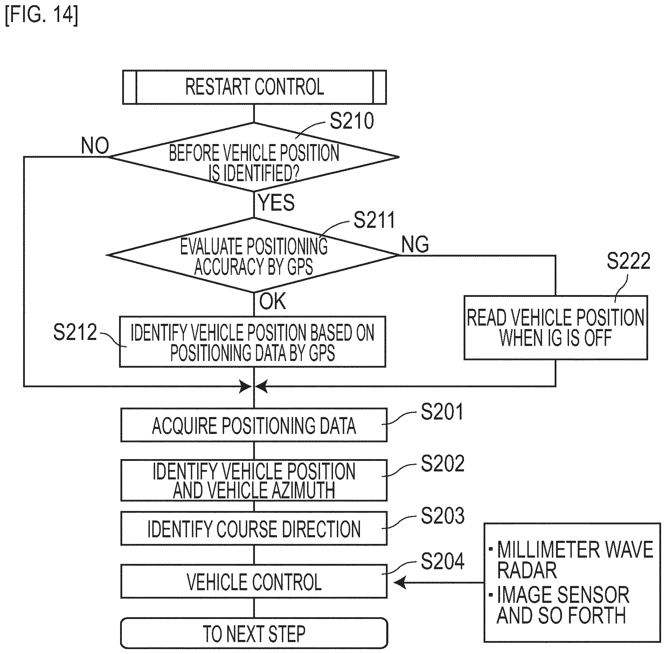

Note in the present embodiment that the configuration has been described in which, when restart control starts in response to switching IG to ON at step S101 (FIG. 8) described above, step S201 (FIG. 9) is immediately performed. In place of this, as in FIG. 14, the configuration may be such that, immediately after restart control starts and before identification of the vehicle position (S210: YES), positioning accuracy by GPS is first evaluated (S211) to determine whether the vehicle position is identified based on the positioning data of GPS.

Here, an example of evaluation of positioning accuracy by GPS is evaluation using the number of satellites capable of receiving satellite waves. For example, evaluation can be thought in which a comparison is made between positioning accuracy by GPS expected based on the number of satellites capable of receiving satellite waves and estimation accuracy of the vehicle position stored in a storage area at the last time of IG OFF, that is, at the last time of a transition to a parking period. An example of an index of positioning accuracy by GPS is the size of an error circle. An index of accuracy of the vehicle position at the time of IG OFF is the range of estimation errors of the vehicle position by inertial navigation.

For example, when the size of the error circle by GPS is smaller than the range of estimation errors of the vehicle position at the time of IG OFF and positioning accuracy by GPS is sufficient (S211: OK), the vehicle position is preferably identified based on the positioning data by GPS (S212). That is, at the start of a restart period, a comparison is performed between accuracy of the vehicle position measured by GPS and estimation accuracy of the vehicle position at the time of the last transition to a parking period and, when positioning accuracy by GPS is higher, the vehicle position measured by GPS is preferably identified as the vehicle position at the start of the restart period. On the other hand, for example, when the size of the error circle by GPS is larger than the range of estimation errors of the vehicle position at the time of IG OFF and positioning accuracy by GPS is not sufficient (S211: NG), the vehicle position stored at the time of IG OFF is preferably read (S222). That is, at the start of a restart period, a comparison is preferably performed between accuracy of the vehicle position measured by GPS and estimation accuracy of the vehicle position at the time of the last transition to a parking period and, when estimation accuracy of the vehicle position at the time of the last transition to a parking period is higher, estimation accuracy of the vehicle position at the time of the last transition to a parking period is preferably identified as the vehicle position at the start of the restart period. Note that process after the vehicle position is identified at step S212 or S222 are similar to the processes described with reference to FIG. 9.

In this manner, after switching to IG ON (corresponding to step S101 in FIG. 8: YES) and when the vehicle position is not identified (S210: YES), it is determined whether the result of evaluation of positioning accuracy of GPS is OK or NG (S211) and, in accordance with that determination result, it is preferable to switch between identifying the vehicle position based on the positioning data by the GPS unit (S212) and reading the vehicle position at the time of IG OFF (S222). As a matter of course, in a situation in which GPS is not usable, for example, satellite waves cannot be received, such as in an underground parking lot, it is preferable to make a determination as NG at step S211 and read the vehicle position at the time of IG OFF (S222).

In the present embodiment, the configuration is exemplarily described in which sheet-shaped RFID tag 15 is attached to the upper surface of magnetic marker 10. However, the configuration in which magnetic marker 10 and RFID tag 15 are integrated is not a requisite. It is only required that magnetic marker 10 and RFID tag 15 are arranged at the same position, and RFID tag 15 may be arranged above or below magnetic marker 10 in a vertical direction.

Note that magnetic marker 10 of the present embodiment is a marker with RFID tag 15 integrated therewith. In place of this, a magnetic marker with RFID tag 15 not affixed thereto may be included. For example, the configuration may such that, while RFID tag 15 is provided to magnetic marker 10 positioned at an intersection, magnetic markers without tags may be arranged at other locations. Alternatively, the configuration may be such that, while magnetic marker 10 including RFID tag 15 is arranged with pitches for every five locations, ten locations, or the like, the other magnetic markers do not have a tag.

Note that in the present embodiment while trunk road 61 with magnetic markers 10 disposed thereon is exemplarily described, the configuration is exemplarily described in which magnetic markers 10 are not disposed on daily service road 62 for movement in area 60. In place of this, magnetic markers 10 may be disposed on all roads. In this case, the restart period is a period after departure from a parking lot facing a road until entrance to the road and first detection of a magnetic marker, a period after restart of traveling of the vehicle parked on a road shoulder until first detection of a magnetic marker, or the like.

Also, an auxiliary magnetic marker may be annexed to at least any of magnetic markers 10. For example, with reference to magnetic marker 10, an auxiliary magnetic marker may be arranged along the direction of the road. If a lateral shift amount with respect to magnetic marker 10 and a lateral shift amount with respect to the auxiliary magnetic marker are known, it is possible to calculate, by arithmetic operation or the like, an angle formed by the direction of a road as a direction connecting magnetic marker 10 and the auxiliary magnetic marker and the forwarding direction of the vehicle. A space between magnetic marker 10 and the auxiliary magnetic marker is preferably a space that can be expected to have a small change in the steered amount on a vehicle side. For example, the space is preferably on the order of 0.2 meters to 3.0 meters, more preferably approximately 1.0 meter. The space may be changed in accordance with the speed limit on the road defined by a law or the like. For example, a space of 1.5 meters to 3.0 meters may be set for a road with a high speed limit, and a space of 0.2 meters to 0.4 meters may be set for a road with a speed limit on the order of 10 kilometers to 20 kilometers per hour.

### (SECOND EMBODIMENT)

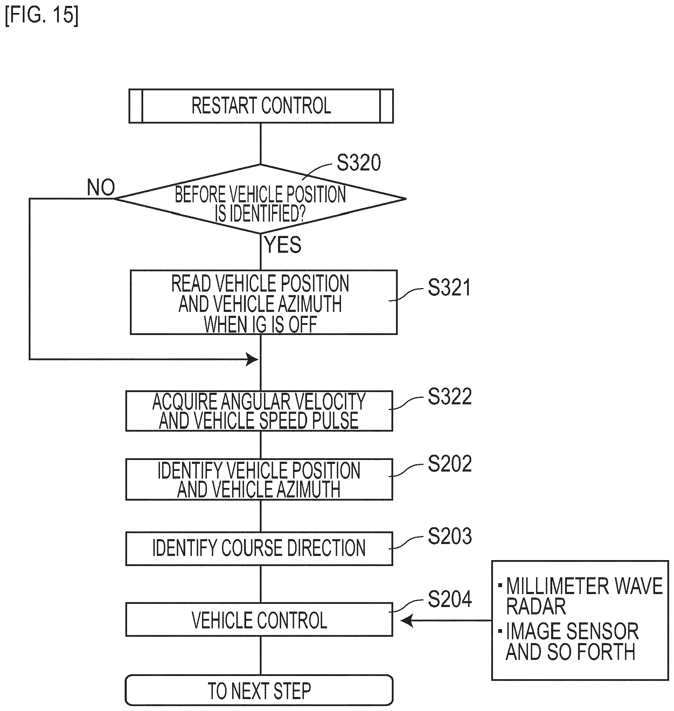

The present embodiment is an example based on the control method for vehicle 5 of the first embodiment, with details of restart control changed. Details of this are described with reference to FIG. 15. The drawing is a drawing that replaces FIG. 9 referred to in the description of the first embodiment. Restart control of the present embodiment replaces restart control of the first embodiment in which positioning by GPS is predominant, and positioning by autonomous navigation (dead reckoning) is predominant.

A control unit (corresponding to reference numeral 18 in FIG. 6 and FIG. 7) of the present embodiment can take a vehicle speed pulse outputted in response to rotation of a wheel, in addition to the angular velocity (change speed of the yaw angle of the vehicle) outputted from a positioning unit (corresponding to reference numeral 16 in FIG. 6 and FIG. 7). The control unit can perform positioning by autonomous navigation by using the angular velocity and the vehicle speed pulse.

Restart control (FIG. 15) of the present embodiment is control to be performed by the control unit in response to switching to IG ON (corresponding to step S101 in FIG. 8: YES). At the start of restart control, the control unit first determines whether the vehicle position has not been identified yet, that is, the state is such that the vehicle position has not been identified since it is immediately after the start of restart control (S320). If the vehicle position has not been identified yet (S320: YES), the control unit reads the vehicle position and the vehicle azimuth stored at the last time of IG OFF, that is, at the time of parking of the vehicle (S321).

After the vehicle position is identified as described above (S320: NO), the control unit acquires the angular velocity, the vehicle speed pulse, and so forth by positioning unit 16 (S322), and identifies the vehicle position and the vehicle azimuth by autonomous navigation (S202). Specifically, control unit 18 estimates a relative position or relative azimuth of vehicle 5 based on the measurement history of angular velocities, output histories of vehicle speed pulses, and so forth after the last time point when the vehicle position and the vehicle azimuth are identified. Then, by adding the estimated relative azimuth to the vehicle azimuth at the reference time point, the control unit identifies the latest vehicle azimuth. Furthermore, the control unit identifies, as the latest vehicle position, a position moved by the estimated relative position with reference to the vehicle position at the reference time point along the latest vehicle azimuth. Note that processes after the vehicle position and the vehicle azimuth are identified at step S202 described above are similar to the processes described with reference to FIG. 9 in the first embodiment.

As a positioning method by autonomous navigation, in place of or in addition to the above-described method using the angular velocity and the vehicle speed pulse, a method may be adopted in which the vehicle position and the vehicle azimuth are estimated by detecting displacement from road surface images temporally successively acquired. This method is a method of identifying a motion of a pattern or the like in the road surface images taken with sufficiently short time pitches by a pictorial scheme such as pattern matching to estimate displacement of the vehicle based on the motion of the pattern or the like.

This method resembles, for example, a method of detecting a motion in an optical mouse. In the optical mouse, only a translational motion is a detection target. In addition to a translational motion, a rotating motion may be detected. If a rotating motion can be detected from the road surface image, which is a taken image of a road surface, it is possible to estimate the vehicle azimuth by autonomous navigation based on the road surface image. The road surface image is preferably, for example, a taken image obtained by taking an image of a road surface directly below the vehicle by using an image-taking camera mounted on the vehicle. For example, while light having a specific wavelength such as infrared light or laser light is applied when a road surface image is taken, a filter lens which lets that specific wavelength pass therethrough may be used when a road surface image is taken. For example, the configuration may be such that while displacement of the vehicle is estimated based on the road surface image, a fluctuation amount of the vehicle azimuth is estimated based on forward images. The fluctuation amount of the vehicle azimuth can be estimated by detecting a motion of, for example, a utility pole or the like, in a lateral direction included in forward images temporally successively acquired. The forward images can be acquired by using an image-taking camera mounted on the vehicle so as to be able to take images of forward scenery.

Note that other configurations, operations, and effects are similar to those of the first embodiment.

In the foregoing, while specific examples of the present invention are described in detail as in the embodiment, these specific examples merely disclose examples of technology included in the scope of the claims. Needless to say, the scope of the claims should not be restrictively construed based on the configuration, numerical values, and so forth of the specific examples. The scope of the claims includes techniques acquired by variously modifying, changing, or combining as appropriate the above-described specific examples by using known techniques, knowledge of a person skilled in the art, and so forth.

### REFERENCE SIGNS LIST

- 1: vehicle system
- 10: magnetic marker
- 14: tag reader unit
- 15: RFID tag (wireless tag)
- 16: positioning unit
- 17: millimeter wave radar
- 18: control unit (circuit)
- 19: image sensor
- 18M: marker database (marker DB, database)
- 18T: map database (map DB)
- 21: sensor array
- 212: detection processing circuit
- 5: vehicle
- 60: area
- 61: trunk road
- 62: daily service road

## Claims

1. A control method for a vehicle including a magnetic sensor to travel a travel road including a travel road where magnetic markers acting magnetism to a peripheral place are disposed, wherein
control is switched between
a restart period after restart of a function of controlling traveling of the vehicle following a parking period during which the function is stopped, until the vehicle moves and first detects a magnetic marker and
a normal travel period after the vehicle detects the magnetic marker following the restart period,
in the restart period, control is performed in which a vehicle position is identified, based on the vehicle position at a last transition to the parking period or a position measured in the restart period, to cause the vehicle to travel, and,
in the normal travel period, control is performed in which the vehicle position is identified, based on a position of any magnetic marker detected, to cause the vehicle to travel.

2. The control method in claim 1, wherein, in the restart period, the vehicle position is measured by using a satellite positioning system.

3. The control method in claim 1 or 2, wherein at start of the restart period, a comparison is performed between accuracy of the vehicle position measured by the satellite positioning system and estimation accuracy of the vehicle position at the last transition to the parking period, and the vehicle position with higher accuracy is identified as the vehicle position at the start of the restart period.

4. The control method in any one of claims 1 to 3, wherein in the restart period, the vehicle position is identified by grasping a peripheral three-dimensional structure by using a sensor mounted on the vehicle, and checking the peripheral three-dimensional structure grasped against a three-dimensional structure represented by a three-dimensional map.

5. The control method in any one of claims 1 to 4, wherein a displacement amount caused by traveling of the vehicle can be estimated, and the vehicle position can be identified based on a position serving as a reference and the displacement amount estimated for traveling after passing over the position serving as the reference.

6. The control method in claim 5, wherein the displacement amount is estimated by temporally successively acquiring taken images of a road surface by using an image-taking camera mounted on the vehicle and making a comparison among the taken images of the road surface acquired at different time points.

7. The control method in any one of claims 1 to 6, wherein a database of position information representing laying positions of the magnetic markers is provided, and
when any magnetic marker is detected by the vehicle, position information of detected magnetic marker is acquired by referring to a storage area of the database, and the vehicle position is identified with reference to a laying position of detected magnetic marker.

8. The control method in any one of claims 1 to 7, wherein, to any of the magnetic markers, a wireless tag which wirelessly outputs information that can identify a laying position of said any of the magnetic markers is annexed, and
when said any of the magnetic markers is detected by the vehicle, the vehicle position is identified with reference to the laying position of detected magnetic marker identified with the information outputted from corresponding wireless tag.

9. The control method in any one of claims 1 to 8, wherein, on a travel road where the magnetic markers are disposed, an auxiliary magnetic marker for identifying a forwarding direction of the vehicle is arranged so as to be adjacent to at least any of the magnetic markers, and
an angle formed by the forwarding direction of the vehicle with respect to a direction connecting the auxiliary magnetic marker and corresponding magnetic marker is calculated by arithmetic operation.

10. A control system for a vehicle including a magnetic sensor to travel a travel road including a travel road where magnetic markers acting magnetism to a peripheral place are disposed, comprising:
a circuit which performs control in a restart period after restart of a function controlling traveling of the vehicle following a parking period during which the function is stopped, until the vehicle moves and first detects a magnetic marker; in the restart period, control is performed in which a vehicle position is identified, based on the vehicle position at a last transition to the parking period or a position measured in the restart period, to cause the vehicle to travel;
a circuit which performs control in a normal travel period after the vehicle first detects the magnetic marker following the restart period; in the normal travel period, control is performed in which the vehicle position is identified, based on a position of any magnetic marker detected, to cause the vehicle to travel; and
a circuit which performs control switching when a transition is made from the restart period to the normal travel period.
